# EUROPÄISCHE PATENTANMELDUNG

(11) **EP 0 822 699 A2**
(43) Veröffentlichungstag der Anmeldung: **04.02.1998**
(21) Anmeldenummer: 97108204.5
(22) Anmeldetag: 21.05.1997
(51) Int. Cl.: H04M 11/02, H04M 1/02

(54) **Digitale Telefonanlage mit mehreren Sprechstellen**

(30) Priorität: 02.08.1996 DE 19631259
(71) Anmelder: ROBERT BOSCH GMBH, 70442 Stuttgart (DE)
(72) Erfinder: Von Haefen, Holger, 38300 Wolfenbuettel (DE); Buchholtz, Jochen, 38104 Braunschweig (DE); Sandhaus, Georg, 38304 Wolfenbüttel Halchter (DE); Toma, Frank-Erik, 61476 Kronberg (DE)

(57) **Zusammenfassung**

Es wird eine digitale Telefonanlage mit mehreren Sprechstellen beschrieben, in welche eine zusätzliche Türruf- und -öffneranlage integriert ist, zu welcher ein Mobilteil als Baugruppe sowie ein Klingelknopf und ein Türöffnerrelais mit einem Öffnerkontakt gehören.

## Beschreibung

### Stand der Technik

Digitale Telefonanlagen finden sich überwiegend in sogenannten Nebenstellenanlagen, die nur über eine TAE-Dose mit dem externen Telefonnetz verbunden sind. Sie bestehen aus einer Basisstation, die an die TAE-Dose angeschlossen ist, und aus ein oder mehreren Mobilteilen, die überwiegend über Funk, d. h. schnurlos mit der Basisstation verbunden sind.

In einer Anzahl dieser digitalen Telefonanlagen können die Sprechstellen in beliebiger Kombination untereinander verbunden werden, d. h. daß auch Gespräche nur zwischen zwei Mobilteilen geführt werden können.

Im externen Telefonnetz bietet das T-Net der Deutschen Telekom seinen Kunden einen Service an, den man als "Anklopfen" bezeichnet, bei dem der telefonierende Kunde einen spezifischen Signalton hört, wenn er während eines Telefonates mit einem ersten Partner von einem zweiten Partner angerufen wird. Der Kunde hat dann die Wahl, das erste Gespräch zu beenden und den zweiten Anruf entgegenzunehmen. Mit entsprechend eingerichteten Telefonapparaten kann der Kunde auch den ersten Anrufer vorübergehend in eine Warteschleife geben.

### Vorteil der Erfindung

Die Erfindung integriert in eine bekannte digitale Telefonanlage eine Türruf- und -öffneranlage.

### Zeichnung

In der Zeichnung zeigt
- Figur 1: das Blockschaltbild einer erfindungsgemäßen Telefonanlage,
- Figur 2: das Blockschaltbild eines abgewandelten Ausführungsbeispiels der erfindungsgemäßen Telefonanlage,
- Figur 3: das Fiußdiagramm des Funktionsablaufes in der Türanlage,
- Figur 4: ein entsprechendes Flußdiagramm in der Basisstation und
- Figur 5: das Flußdiagramm in einem Mobilteil.

### Beschreibung der Ausführungsbeispiele

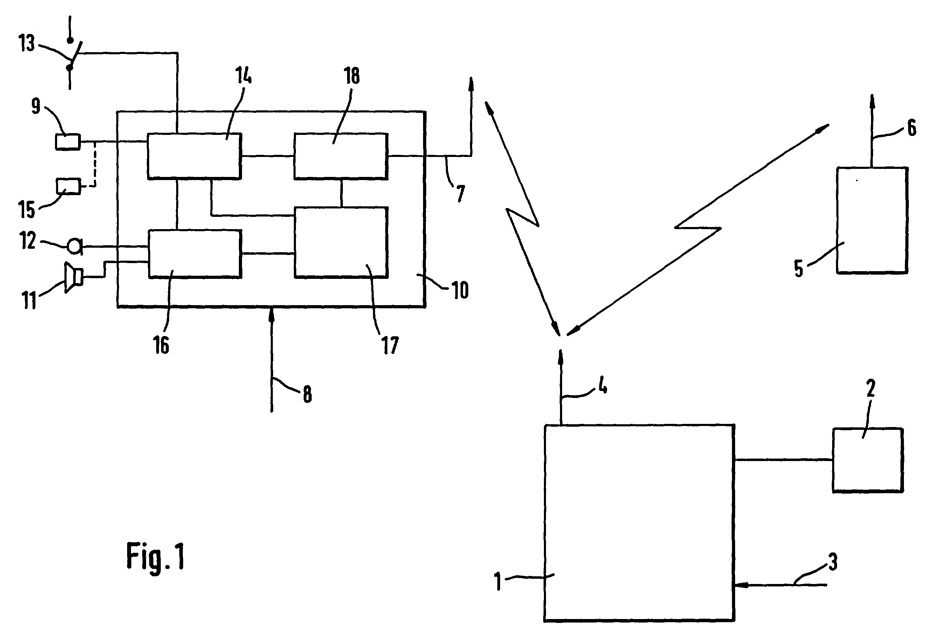

Der in Figur 1 dargestellte Schaltungsaufbau einer digitalen Telefonanlage umfaßt eine Basisstation 1, welche an die bekannte TAE-Dose 2 des externen Telefonnetzes angeschlossen ist und über eine Leitung 3 zusätzlich mit Energie versorgt wird. Über eine Antenne 4 steht die Basisstation 1 mit anderen Sprechstellen auf dem Funkwege, d. h. schnurlos, in Verbindung.

Weiter gehört zu der dargestellten Telefonanlage ein Mobilteil 5, auch "Handy" genannt, welches über eine Antenne 6 zur Funkverbindung mit der Basisstation 1 verfügt.

Schließlich ist eine Türruf- und -öffneranlage Teil der Telefonanlage, die über ihre Antenne 7 ebenfalls schnurlos an die Basisstation 1 angebunden ist. Die Türanlage ist in der Nähe einer normalerweise verschlossen gehaltenen Tür, z. B. Haus- oder Gartentür, installiert. Die Stromversorgung der Türanlage erfolgt an einem Anschluß 8, an den entweder eine Fernspeisung über herkömmlichen Klingeldraht oder ein 220 V Netzteil oder aber Solarzellen anschließbar sind.

Zur Türanlage gehören ein Klingelknopf 9, mit dem der Besucher seine Anwesenheit vor der Tür signalisieren kann. Ferner als Baugruppe 10 die Elektronik eines weiteren Mobilteils, über dessen Lautsprecher 11 der Hausbewohner oder Pförtner den Besucher ansprechen kann, während der Besucher über das von außen zugängliche Mikrofon 12 dem Hausbewohner antworten kann. Schließlich umfaßt die Türanlage ein nicht näher dargestelltes Türöffnerrelais, zu dem ein Öffnerkontakt 13 gehört.

Der Schaltzustand des Öffnerkontaktes 13 wird von einem Ausgang eines Mikrokontrollers 14 in der Baugruppe 10 gesteuert.

Der Klingelknopf 9 und etwaige weitere Bedientasten 15 sind an zugeordnete Eingänge des Mikrokontrollers 14 angeschlossen.

Der Lautsprecher 11 und das Mikrofon 12 sind in an sich bekannter Weise über einen AD/DA-Umsetzer 16 mit einem zugeordneten Anschluß des Mikrokontrollers 14 verbunden. Außerdem ist der AD/DA-Umsetzer 16 mit einem Burst-Mode-Conttoller 17 verbunden. Dieser Burst-Mode-Controller 17 ist über einen zweiten Anschluß seinerseits an einen zugeordneten Anschluß des Mikrokontrollers 14 angeschlossen. Über einen dritten Anschluß steht der Burst-Mode-Controller 17 mit einem HF-Teil 18 in Verbindung.

An einem zweiten Anschluß des HF-Teils 18 ist der Mikrokontroller 14 angeschlossen, während an einem dritten Anschluß des HF-Teils 18 die Antenne 8 hängt, über welche die Türanlage schnurlos an die Basisstation angebunden ist.

Wie die Anbindungszeichen in Figur 1 verdeutlichen, erfolgt die Anbindung zwischen einem Mobilteil 5 und dem Mobilteil 10, 11, 12 in der Türanlage stets über die Basisstation 1.

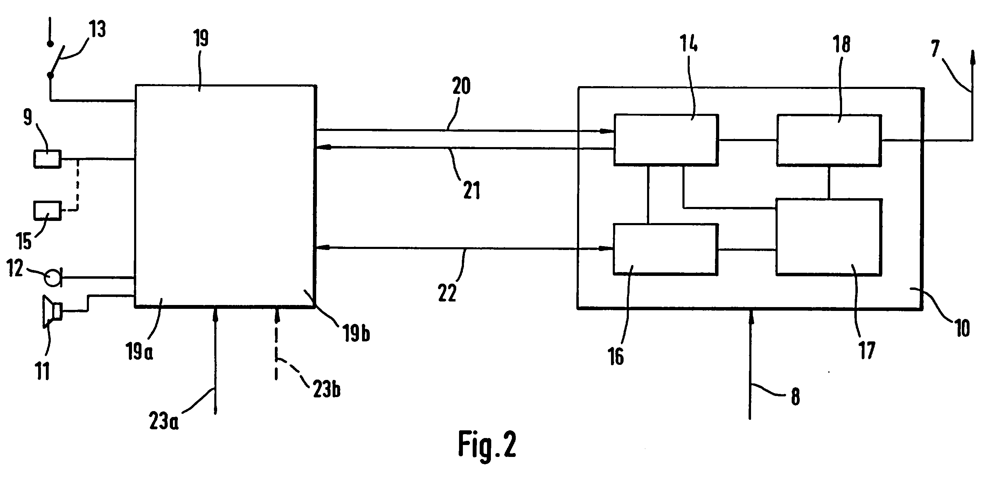

In dem abgewandelten Ausführungsbeispiel der Erfindung, welches in Figur 2 dargestellt ist, ist zwischen dem Mikrokontroller 14 und den diesen steuernden Klingelknopf 9 sowie dem vom Mikrokontroller 14 gesteuerten Öffnerkontakt 13 einerseits und dem Lautsprecher 11 sowie dem Mikrofon 12 und dem AD/DA-Umsetzer 16 andererseits eine handelsübliche drahtgebundene Türsprechanlage 19 eingeschleift, die eine Türsprechstelle 19 a und eine hausinterne Sprechstelle 19 b umfaßt. Dieses Ausführungsbeispiel zeigt, daß und wie bereits vorhandene Türsprechanlagen in eine digitale Telefonanlage integrierbar sind. Dazu wird die Baugruppe 10 zu der hausinternen Sprechstelle 19 b der vorhandenen Türsprechanlage parallel geschaltet, wobei das Klingelsignal die Baugruppe 10 über die Leitung 20 erreicht und der Mikrokontroller 14 den Öffnerkontakt 13 über die Leitung 21 steuert, während die analogen Sprachdaten, die über eine 2-Draht- oder 4-Draht-Leitung zwischen der Sprechstelle 19 a an der Tür und der hausinternen Sprechstelle 19 b der drahtgebundenen Türsprechanlage 19 ausgetauscht werden, parallel dazu über die Leitung 22 auch mit dem AD/DA-Umsetzer 16 ausgetauscht werden. Die Speisung der beiden Teile der vorhandenen drahtgebundenen Türsprechanlage erfolgt in bekannter Weise über deren Anschlüsse 23 a und 23 b.

Die zur hausinternen Sprechstelle 19 parallel geschaltete Baugruppe 10 kann durchaus draußen, d. h. räumlich neben der Türsprechanlage angeordnet sein.

Letztlich kann die Baugruppe 10 auch die hausinterne Sprechstelle 19 b ersetzen.

Auch liegt es im Rahmen der Erfindung, wenn in die Baugruppe 10 eine nicht näher dargestellte drahtlose Relaisstation, ein an sich bekannter sogenannter Repeater, integriert ist, dessen Aufgabe darin besteht, den Bereich zu vergrößern, in welchem eine drahtlose Kommunikation möglich ist.

Der Aufbau und der Abbau einer Gesprächsverbindung zwischen dem Mobilteil in der Türanlage und der Basisstation bzw. einem anderen Mobilteil wird von dem in den Mikrokontrollern der genannten Sprechstellen jeweils gespeicherten Hauptprogrammen gesteuert.

Das ganze Hauptprogramm für das Zusammenwirken der Mikrokontroller bei einer Gesprächsverbindung gehört zum Stand der Technik, so daß auf dessen nähere Beschreibung hier verzichtet werden kann.

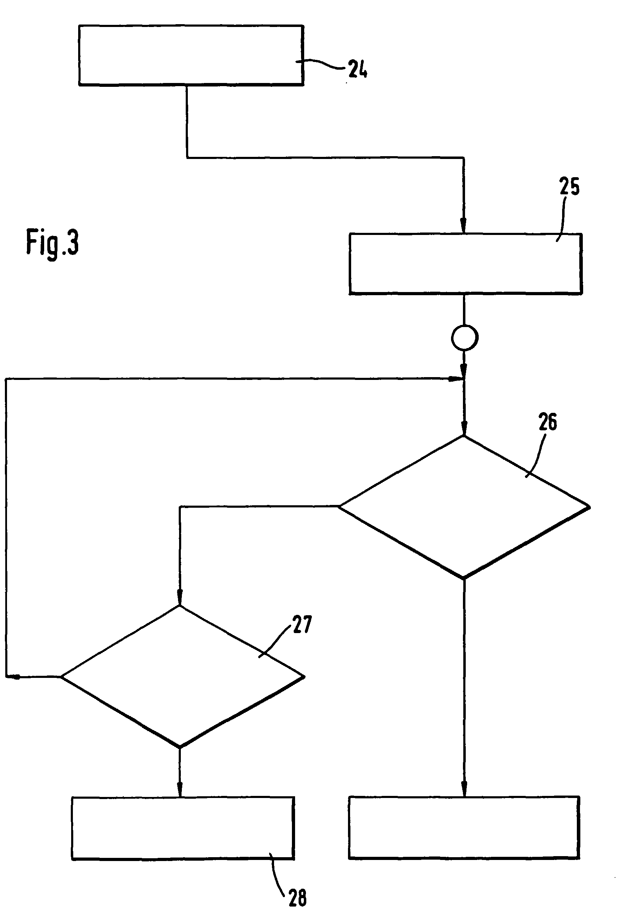

Die weitere Beschreibung beschränkt sich daher auf die Erläuterung der Figuren 3 bis 5, in denen das die Erfindung realisierende Zusatzprogramm für den neuen Betriebszustand "Türöffnung" und seine Verknüpfungsstellen mit dem Hauptprogramm dargestellt sind.

Der Betriebszustand "Türöffnung" wird in der Telefonanlage eingeschaltet, sobald der Klingelknopf 9 im Programmschritt "24" in der Türanlage betätigt wird.

Wie in Figur 3 gezeigt ist, löst das Klingelsignal , dessen Erkennung im Programmschritt "24" des Zusatzprogramms der Türanlage erfolgt, den Aufbau der Verbindung zur Basisstation im Programmschritt 25 im Hauptprogramm aus. Der Klingelknopf 9 entspricht insoweit dem Gabelkontakt in dem Hauptprogramm.

Solange die Türanlage im Hauptprogrammschritt "26" kein Signal zum Abbau der Verbindung von der Basisstation empfangen hat, wartet das Zusatzprogramm im Programmschritt "27" auf den Empfang eines Öffnersignals von der Basisstation. Ist ein Öffnersignal von der Basisstation empfangen, dann wird der Öffnerkontakt 13 im Zusatzprogrammschritt "28" der Türanlage betätigt.

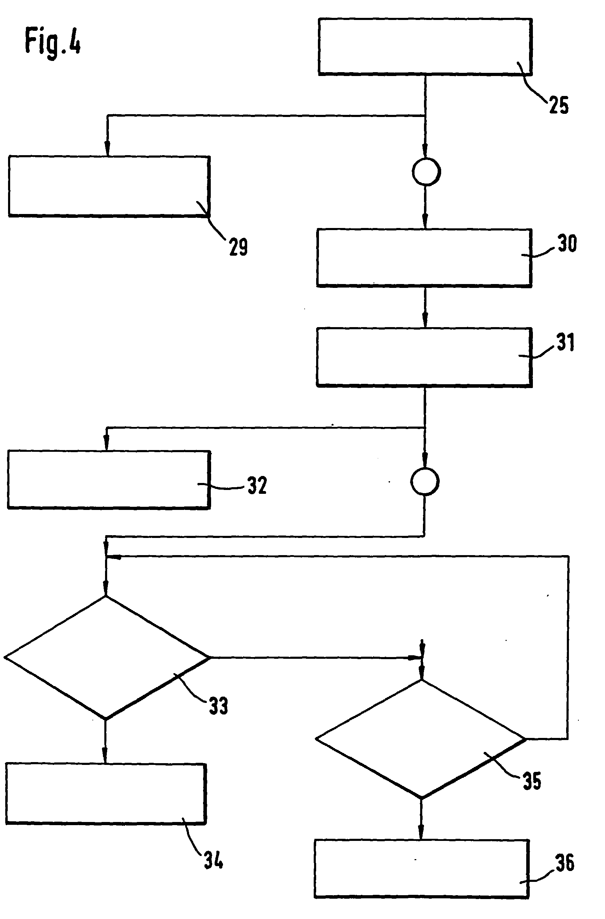

Das Klingelsignal wird über die von der Türanlage im Programmschritt "25" aufgebaute Verbindung zur Basisstation geleitet und veranlaßt auch dort, wie in Figur 4 dargestellt ist, das Wirksamwerden des Zusatzprogrammes für den Betriebszustand "Türöffnung". Der Zusatzprogrammschritt "29" leitet das Klingelsignal gleichzeitig zu allen Mobilteilen weiter, sofern diese Mobilteile nicht abgemeldet sind.

Danach wartet im Hauptprogrammschritt "30" die Basisstation auf den Empfang eines Annahmesignals von einem der Mobilteile und verknüpft im Hauptprogrammschritt "31" dann das annehmende Mobilteil 5 mit der Baugruppe 10 des in der Türanlage integrierten Mobilteils. Zugleich wird im Zusatzprogrammschritt "32" die Weiterleitung des Klingelsignals zu den verbleibenden Mobilteilen beendet.

Sodann wartet die Basisstation im Zusatzprogrammschritt "33" auf den Empfang eines Öffnersignals von dem angeschlossenen Mobilteil und leitet dieses im Programmschritt "34" zur Türanlage weiter.

Der Klingelruf kann natürlich auch in der Basisstation selbst angenommen und dort auch das Öffnersignal ausgelöst werden.

Statt eines Öffnersignals im Zusatzprogramm kann auch in der Basisstation ein Signal zum Abbau der Verbindung im Hauptprogrammschritt "35" von dem annehmenden Mobilteil empfangen oder direkt in der Basisstation ausgelöst werden und im Hauptprogrammschritt "36" zur Türanlage weitergeleitet werden.

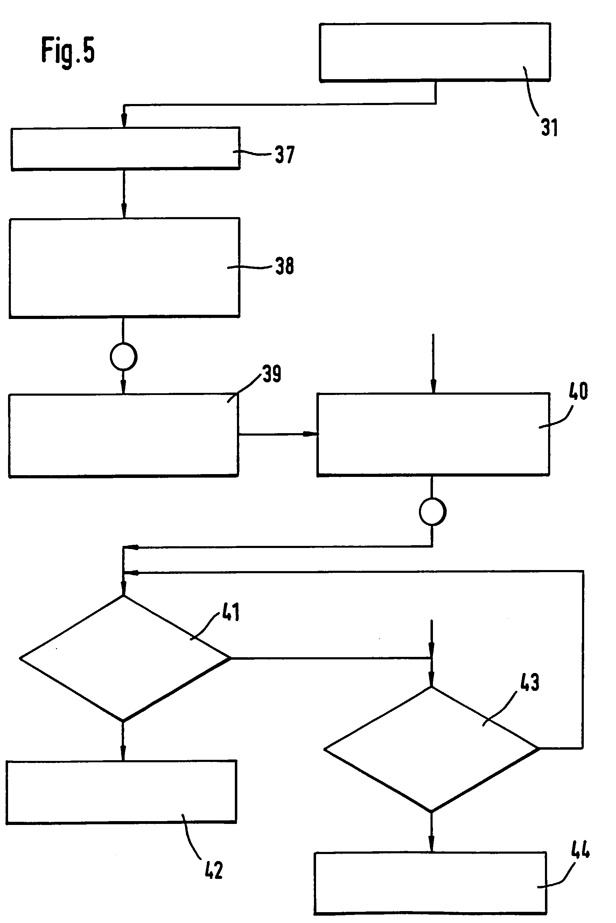

Wie in Figur 5 gezeigt ist, errichtet im Hauptprogrammschritt "31" die Basisstation 1 den Verbindungsaufbau zum Mobilteil 5. Das in dem Zusatzprogrammschritt "37" empfangene Klingelsignal erzeugt im Programmschritt "38" einen speziellen Ruf, der sich von dem Ruf erkennbar unterscheidet, welcher ein ankommendes Gespräch im Hauptprogramm ankündigt.

Das Klingelsignal kann bei entsprechender Ausgestaltung des Hauptprogrammes der Sprechstellen einem gerade geführten Gespräch überlagert werden. Dazu muß das Hauptprogramm über einen als "Anklopfen" bezeichneten Programmschritt verfügen.

Mit der Annahme des speziellen Klingelrufes in dem Zusatzprogrammschritt 39 des Mobilteils wird der Aufbau der Gesprächsverbindung zur Türanlage im Hauptprogrammschritt "40" abgeschlossen. Nach der Annahme des Klingelrufes kann der Mobilteilbenutzer sich mit dem Besucher unterhalten und nach dem Gespräch oder aber sofort nach der Annahme des Rufes die Öffnertaste im Zusatzprogrammschritt "41" drücken. Das Öffnersignal wird im Zusatzprogrammschritt "42" über die Basisstation 1 zur Türanlage geleitet und löst dort, wie bereits beschrieben, die Betätigung des Türöffnerrelais 13 aus. Danach wird durch erneutes Betätigen der Gabeltaste im Hauptprogrammschritt "43" der Verbindungsabbau im Hauptprogrammschritt "44" eingeleitet.

Bei entsprechender Ausstattung des Hauptprogrammes kann der Benutzer des Mobilteils 5 auch gegebenenfalls einen wartenden ersten Gesprächspartner aus der Warteschleife zurückholen.

Für die Klingel- und Öffnersignale im Zusatzprogramm wird der Fachmann zweckmäßigerweise Strukturen wählen, die der Signalstruktur im Hauptprogramm angepaßt sind.

### Legende

- 1.: Basisstation
- 2.: TAE-Dose
- 3.: Anschluß für Energiezufuhr
- 4.: Antenne der Basisstation
- 5.: Mobilteil
- 6.: Antenne des Mobilteils
- 7.: Antenne der Türanlage
- 8.: Anschluß für deren Stromversorgung
- 9.: Klingelknopf
- 10.: Mobilteilbaugruppe
- 11.: Lautsprecher
- 12.: Mikrofon
- 13.: Öffnerkontakt
- 14.: Mikrokontroller
- 15.: Bedientaste
- 16.: AD/DA-Umsetzer
- 17.: Burst-Mode-Controller
- 18.: HF-Teil
- 19.: drahtgebundene Türsprechanlage
- 20,21,22: Verbindungsleitungen
- 23.: Anschluß für Energiezufuhr zu 19
- 24-44.: Programmbefehle

## Patentansprüche

1. Digitale Telefonanlage mit mehreren Sprechstellen, die auch beliebig untereinander verbindbar sind und von denen eine - als Basisstation - mit dem öffentlichen Telefonnetz verbunden ist, während die übrigen - als Mobilteile - über Funk mit der Basisstation verbunden sind,
gekennzeichnet
durch eine auf dem Funkweg mit der Basisstation verbundene Türruf- und -öffneranlage, die ein Mobilteil als Baugruppe (10) umfaßt und mit deren Klingelknopf (9) die Telefonanlage in einen Betriebszustand "Türöffnung" schaltbar ist, in welcher der Klingelruf zu allen Sprechstellen (1, 5) geleitet wird und die den Klingelruf annehmende Sprechstelle
(1, 5) den Aufbau einer Schaltverbindung zu dem Öffnerkontakt (13) eines Türöffnerrelais auslöst.

2. Digitale Telefonanlage nach Anspruch 1,
dadurch gekennzeichnet,
daß der Klingelruf auch zu bereits mit anderen Sprechstellen oder dem externen Netz verbundenen Sprechstellen (1, 5) geleitet wird.

3. Digitale Telefonanlage nach Anspruch 2,
dadurch gekennzeichnet,
daß jede den Klingelruf annehmende Sprechstelle (1, 5) einen etwaigen bisherigen Gesprächspartner in eine Warteschleife geben kann.

4. Digitale Telefonanlage nach einem der Ansprüche 1 bis 3,
dadurch gekennzeichnet,
daß die Stromversorgung der Türanlage durch Solarzellen erfolgt.

5. Digitale Telefonanlage nach einem der Ansprüche 1 bis 4,
dadurch gekennzeichnet,
daß die Mobilteilbaugruppe (10) einer hausinternen Sprechstelle (19 b) einer drahtgebundenen Türsprechanlage parallel geschaltet ist.

6. Digitale Telefonanlage nach einem der Ansprüche 1 bis 5,
dadurch gekennzeichnet,
daß in die Mobilteilbaugruppe (10) ein Repeater integriert ist.
